(19) Europäisches Patentamt
European Patent Office
Office européen des brevets

(11) **EP 0 965 501 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **B60R 21/32**, B60R 21/01, H02M 3/156

(21) Anmeldenummer: **99110571.9**

(22) Anmeldetag: **01.06.1999**

(54) **Vorrichtung zum Zünden eines Zündelements eines Kraftfahrzeug-Insassenschutzmittels**

Apparatus for igniting the squib of a vehicle passive restraint system

Dispositif de mise à feu du détonateur d'un système de retenue d'un véhicule

(84) Benannte Vertragsstaaten:
**DE FR GB IT**

(30) Priorität: **16.06.1998 DE 19826704**

(43) Veröffentlichungstag der Anmeldung:
**22.12.1999 Patentblatt 1999/51**

(73) Patentinhaber: **SIEMENS AKTIENGESELLSCHAFT**
**80333 München (DE)**

(72) Erfinder:
• **Hermann, Stefan**
**93096 Köfering (DE)**
• **Grosshauser, Frank**
**86529 Schrobenhausen (DE)**

(56) Entgegenhaltungen:
EP-A- 0 805 074       EP-A- 0 813 998
DE-A- 3 336 841       US-A- 4 253 055
US-A- 5 734 259

**Beschreibung**

Die Erfindung betrifft eine Vorrichtung zum Zünden eines Zündelements eines Kraftfahrzeug-Insassenschutzmittels gemäß dem Oberbegriff von Patentanspruch 1.

Vorrichtungen zum Zünden eines Zündelements eines Kraftfahrzeug-Insassenschutzmittels enthalten gewöhnlich eine Energiequelle, mit deren Polen eine Serienschaltung bestehend aus einem steuerbaren Schalter, dem Zündelement und einem weiteren steuerbaren Schalter verbunden ist. Die elektrisch steuerbaren Schalter werden zum Zünden des Zündelements von einem Mikroprozessor leitend geschaltet. Dabei wertet der Mikroprozessor Signale einer Aufprallsensorik aus und veranlaßt bei einem als ausreichend stark eingestuften Aufprall das Zünden des Zündelements auf vorbeschriebene Weise.

Gewöhnlich weisen die meist als elektrisch steuerbare Leistungstransistorschalter ausgebildeten Schalter im Zündkreis strombegrenzendes Verhalten auf. Dabei wird infolge der Auslegung des Schalters nur ein maximaler Strom zum Durchfluß durch den Schalter zugelassen, wohingegen beispielsweise die in Stromspitzen enthaltene Energie im Transistorschalter in Wärme umgewandelt wird.

Eine Ursache für diese Strombegrenzung liegt darin, daß bei unvorhergesehenen Stromspitzen das Zündelement beschädigt werden kann. Ist beispielsweise das Zündelement als gewickelter Widerstandsheizdraht ausgebildet, so kann dieser Draht infolge eines Spitzenstromes durchbrennen, bevor eine ausreichende Menge an Energie über den Heizdraht auf das den Heizdraht umgebende Zündpulver zum Zünden desselbigen übertragen wird. Ist das Zündelement in einem Halbleiterbauelement angeordnet, so kann eine Stromspitze einen Durchschlag des Halbleiterbauelements verursachen: Wiederum ist eine zum Zünden ausreichende Energieumwandlung nicht gewährleistet. Durch die Strombegrenzung wird also garantiert, daß die Energiewandlung am Zündelement und damit die Energieübertragung auf das Zündpulver innerhalb einer erforderlichen Mindestdauer in gleichmäßiger Weise erfolgt.

Da zumeist ein Speicherkondensator als Energiequelle verwendet wird, muß dieser derart dimensioniert sein, daß er eine Mindestzeit nach dem Leitendschalten der Schalter einen Mindeststrom liefern kann. Aufgrund einer derartigen Dimensionierung des Zündkondensators mit seiner beim Zünden exponentiell über der Zeit abfallenden Spannung wird zu Beginn eines Zündvorgangs in jedem Fall die Strombegrenzung aktiviert. An den steuerbaren Schaltern ist damit ein hoher Spannungsabfall festzustellen, der gleichbedeutend ist mit einem hohen Energieverlust an den Schaltern infolge der strombegrenzenden Wirkung.

Eine Maßnahme, die einen übermäßigen Spannungsabfall an den steuerbaren Schaltern verringern würde, liegt in der Verringerung der Kondensatorspannung. Da die in einem Kondensator

gespeicherte Energie sich jedoch nach dem Term $\frac{C*U^2}{2}$ bemißt, würde eine Verringerung der Kondensatorspannung U, welche eine Stromentladung aus dem Kondensator mit einer größeren Zeitkonstante als bei einer hohen Kondensatorspannung U zur Folge hätte, jedoch in nachteilhafter Weise zu einer Vergrößerung der Kapazität C des Zündkondensators führen. Eine große Kapazität ist in einem Airbag-Steuergerät jedoch aus Raum- und Gewichtsgründen nicht erwünscht.

Die Anmelderin hat in der WO 98/12082 eine Vorrichtung vorgeschlagen, bei der die beiden steuerbaren Schalter Bestandteil eines stromregelnden Schaltreglers sind. Ein solcher Schaltregler hat die Wirkung, daß der Strom im Zündkreis um einen vorgebbaren Mittelwert pendelt. Dabei werden die beiden Schalter nur dann zum Schließen freigegeben, wenn der Mikroprozessor des Airbag-Steuergeräts einen ausreichend starken Aufprall erkannt hat. Im folgenden steigt der Strom im Zündkreis infolge der Spannungsänderung am Kondensator an, wobei der im Zündkreis fließende Strom durch einen Stromsensor zwischen dem Zündelement und einem der steuerbaren Schalter aufgenommen wird. Der derart gemessene Strom wird in einer Hysteresesteuerung mit zwei vorgegebenen Referenzwerten verglichen. Übersteigt der gemessene Strom einen vorgegebenen ersten Referenzwert, so werden die beiden Schalter wieder geöffnet. Aufgrund der Spannungsänderung fällt der Strom im Zündkreis im folgenden wieder ab. Unterschreitet der gemessene Strom jedoch einen zweiten Referenzwert, so werden die steuerbaren Schalter wieder geschlossen. Der Schaltregler weist also eine Schalthysterese auf, so daß sich im Zündkreis ein um einen Mittelwert pendelnder Strom einstellt. Der Vorteil dieser Vorrichtung liegt darin, daß die steuerbaren Schalter ohne strombegrenzendes Verhalten ausgebildet werden können, da auf regeltechnische Weise der Strom im Zündkreis begrenzt wird. Damit kann auch eine Überdimensionierung des Zündkondensators vermieden werden, da nur noch die zum Zünden erforderliche Energie bereitgestellt werden muß, welche infolge des Schaltreglers gleichmäßig über eine Mindestzeitdauer verteilt dem Zündelement zugeführt wird.

In der WO 97/32757 (Oberbegriff von Anspruch 1) hat die Anmelderin eine Vorrichtung zum Zünden eines Zündelements eines Kraftfahrzeug-Insassenschutzmittels offenbart, bei der neben den beiden bekannten steuerbaren Schaltern eines Zündkreises ein weiterer elektrisch steuerbarer Schalter in Serie dazu vorgesehen ist.

Die beiden bekannten steuerbaren Schalter sind gewöhnlich auf einem gemeinsamen Halbleiterträger angeordnet und werden durch vorbeschriebenen Mikroprozessor gesteuert. Da Mikroprozessoren bei gravierenden Störungen vorzugsweise ein Fehlverhalten dergestalt aufweisen, daß ihre Ausgänge mit einem Aktivsignal bzw. einer logischen Eins belegt werden, und andererseits ein Halbleiterbaustein bei einem gravierenden Fehler vorzugsweise alle in dem Halbleiterbaustein integrierten Bauelemente beeinträchtigt und gegebenenfalls die beiden Schalter kurzschließt, ist der dritte steuerbare Schalter ist auf einem separaten Träger angeordnet und wird vorzugsweise durch eine hardwaremäßig separat von dem Mikroprozessor ausgebildete Steuereinrichtung bedient.

Aufgabe der Erfindung ist es, ausgehend von der aus der WO 97/32757 bekannten Vorrichtung eine Vorrichtung zum Zünden eines Zündelements eines Kraftfahrzeug-Insassenschutzmittels zu schaffen, bei der hohe Energieverluste im Zündkreis vermieden werden, die Kapazität des Zündkondensators gering bemessen werden kann, die Anzahl der Bauelemente minimiert ist und gleichzeitig eine Fehlauslösung des Zündelements wirksam verhindert wird.

Diese Aufgabe wird erfindungsgemäß gelöst durch die Merkmale des Patentanspruchs 1. Dabei ist lediglich der erste steuerbare Schalter, welcher zwischen der Energiequelle und dem zweiten steuerbaren Schalter angeordnet ist, Bestandteil eines spannungsregelnden Schaltreglers. Der Schaltregler geht nur dann in den Regelbetrieb, wenn ein entsprechendes Signal von einer Aufprallerkennungsschaltung vorliegt. Der zweite und der dritte steuerbare Schalter, die jeweils direkt mit dem Zündelement verbunden sind, sind während eines Zündvorganges durch eine Aufprallerkennungseinrichtung fortwährend durchgeschaltet.

Es bedarf keinerlei strombegrenzenden Maßnahmen für den ersten, zweiten und dritten steuerbaren Schalter. Infolge des Einsatzes des Schaltreglers (Step-Down-Reglers) kann der Energievorrat in der Energiequelle, insbesondere wenn diese in ihrem Energiespeichervermögen begrenzt ist, geeignet gering dimensioniert werden und braucht keine überschüssigen, beim Zünden in Wärmeenergie umzuwandelnden Energiereserven beinhalten. Die Kapazität des Zündkondensators kann ferner klein bemessen werden, da die dann hohe Zündkondensatorspannung zwischen den Polen des Zündkondensators infolge des Schaltreglers beim Zündvorgang auf eine geringe, aber noch zum Zünden des Zündelements ausreichende Spannung zwischen dem zweiten steuerbaren Schalter und dem einen Pol des Zündkondensators geregelt wird.

Zudem ist die Gefahr einer Fehlauslösung verringert. Betriebsgemäß werden im Rahmen von Diagnosefunktionen, beispielsweise zu Beginn der Kraftfahrzeug-Inbetriebnahme, die steuerbaren Schalter des Zündkreises auf ihre Funktionstüchtigkeit, d.h. auf ihre Schließ- und Öffenbarkeit hin überprüft. Wird beispielsweise bei einem herkömmlichen Zündkreis mit zwei Schaltern der eine Schalter getestet und liegt zwischen Zündelement und dem zweiten Schalter, der während des Test ersten Schalters durch seinen geöffneten Zustand ein Auslösen des Zündelements verhindern soll, eine Ableitung gegen ein Energiepotential vor, so wird das Zündelement aufgrund des Schaltertests ausgelöst. Eine solche Fehlauslösung wird bei der erfindungsgemäßen Vorrichtung verhindert. Selbst bei einer Ableitung gegen ein Energiepotential an einer beliebigen Stelle des Zündkreises kann bei dem Test eines der drei vorgesehenen Schalter das Zündelement in keinem Fall ausgelöst werden.

Die Vorrichtung ist also optimiert hinsichtlich des Schutzes vor einer Fehlerauslösung, hinsichtlich der bereitzustellenden Energiereserve und hinsichtlich der verwendeten Bauteileanzahl.

Bei dem Umsetzen des zweiten und des dritten steuerbaren Schalters auf einem Halbleitersubstrat kann ferner die aufzuwendende Fläche im Halbleiterbaustein minimiert werden, da Gebiete zur Wärmeumwandlung, wie sie bei einem Schalter mit Strombegrenzung erforderlich sind, wegfallen.

In einer vorteilhaften Weiterbildung der Erfindung enthält die Vorrichtung mehrere Zündelemente. Dabei ist jedes Zündelement Bestandteil einer Serienschaltung mit jeweils einem weiteren zweiten steuerbaren Schalter und einem weiteren dritten steuerbaren Schalter. Jede Serienschaltung ist parallel angeordnet zu der entsprechenden Serienschaltung des ersten Zündelements. Eine solche Vorrichtung enthält also je Zündelement zwei individuell ansteuerbare Schalter sowie einen für alle Zündelemente gemeinsamen steuerbaren Schalter, der erfindungsgemäß ein Schaltreglerbestandteil ist. Zum Zünden eines Zündelements sind demnach der gemeinsame erste steuerbare Schalter, sowie die dem Zündelement individuell zugeordneten zwei steuerbaren Schalter leitend zu schalten. Infolge des Schaltreglers wird bei Einleiten eines Zündvorgangs die Spannungszufuhr für die Zündkreise, eben die der Energiequelle entnommene Spannung zum Versorgen eines oder mehrerer Zündelemente, auf eine mit einer Schalthysterese um einen vorgegebenen Mittelwert pendelnde Spannung geregelt.

Erfindungsgemäß wird also die Kondensatorspannung einer Schaltregelung unterzogen. Die schaltgeregelte Spannung für die Zündkreise ist dabei derart bemessen, daß auch bei gleichzeitiger Zündung aller Zündelemente eine ausreichende Energiemenge für jedes Zündelement zu Verfügung gestellt wird.

In einer vorteilhaften Weiterbildung sind alle zweiten Schalter der Zündkreise sowie alle dritten Schalter der Zündkreise mit strombegrenzenden Verhalten ausgestattet. Diese Maßnahme trägt der Situation Rechnung, daß ein gezündetes Zündelement nach dem Zündenkurzgeschlossen sein kann, so daß ein Energieabfluß über das kurzgeschlossene Zündelement festzustellen ist. Für weitere noch nicht gezündete Zündelemente könnte die verbleibende, durch den gemeinsamen Zündkondensator zur Verfügung gestellte begrenzte Zündenergie aufgrund infolge dieses Energieabflusses nicht mehr ausreichen. Schalter mit strombegrenzenden Verhalten in den Zündkreisen verhindern einen solchen wirkungslosen Energieabfluß und gewährleisten damit ein sicheres Zünden weiterer Zündelemente.

Weitere vorteilhafte Ausgestaltungen sind durch die Unteransprüche gekennzeichnet.

Die Erfindung und ihre Weiterbildungen werden anhand von Ausführungsbeispielen in der Zeichnung näher erläutert. Es zeigen:

Figur 1     ein Blockschaltbild einer erfindungsgemäßen Vorrichtung, und

Figur 2     einen beispielhaften Spannungsverlauf während des Zündbetriebs.

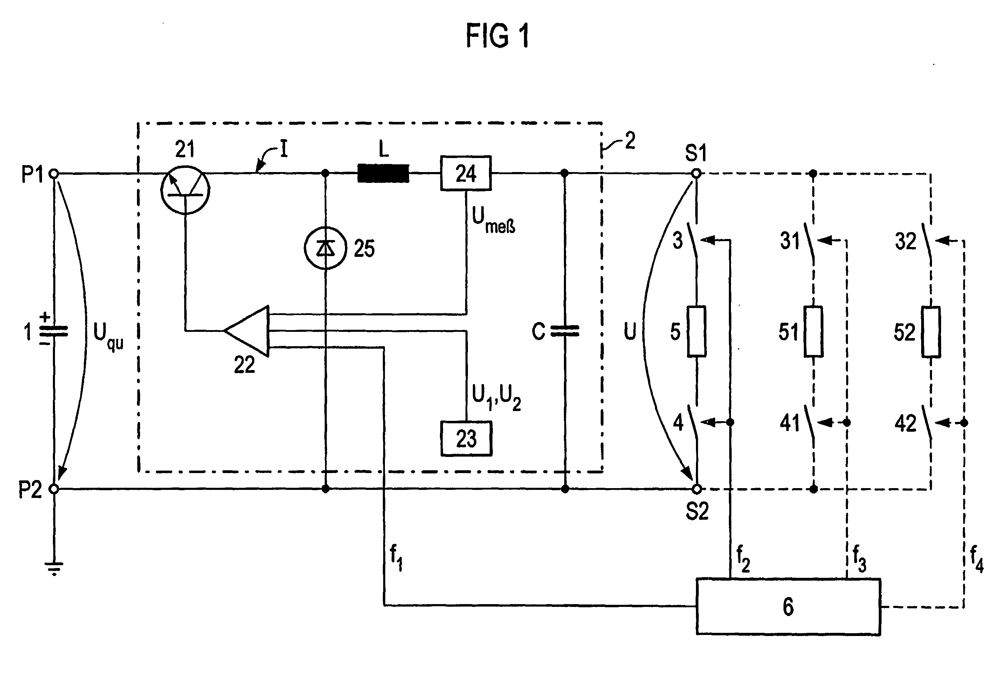

Figur 1 zeigt eine Vorrichtung zum Zünden eines Kfz-Insassenschutzmittels. Eine Spannungsquelle 1 in Form eines Speicherkondensators mit den Anschlüssen und Polen P1 und P2 stellt Energie zum Zünden eines Zündelements 5 bereit. Zwischen den Polen P1 und P2 der Spannungsquelle 1 liegt die Kondensatorspannung - auch Quellenspannung genannt - an. Zwischen den Polen P1 und P2 der Spannungsquelle 1 sind ein erster elektrisch steuerbarer Schalter 21 in Form einer Leistungsstufe, ein zweiter elektrisch steuerbarer Schalter 3, das Zündelement 5 sowie ein dritter elektrisch steuerbarer Schalter 4 - ebenfalls Leistungsstufen - angeordnet. Nur wenn alle Schalter 21, 3 und 4 gleichzeitig schließen, wird Energie von der Spannungsquelle 1 auf das Zündelement 5 übertragen.

Dazu wertet eine Aufprallsteuerung 6 unter Zuhilfenahme einer geeigneten Aufprallsensorik ein Unfallgeschehen aus und liefert ein erstes Freigabesignal f1 an eine Hysteresesteuerung 22, welche das Freigabesignal f1 zunächst an den ersten Schalter 21 weiterleitet und diesen damit leitend schaltet. Zum elektrischen Steuern der Schalter 3 und 4 ist ein weiteres Freigabesignal f2 der Aufprallsteuerung 6 vorgesehen. Zur Ansteuerung der Schalter 21, 3 und 4 sind eine Vielzahl von Varianten denkbar: Beispielsweise kann der erste Schalter 21 auch durch eine in ihrer Hardware separat von der Aufprallsteuerung 6 ausgebildete Steuerschaltung beschleunigungsabhängig betätigt werden. Der mit der Steuerschaltung verbundene Beschleunigungsaufnehmer ist dabei ebenfalls separat ausgebildet von einem Beschleunigungsaufnehmer oder sonstigen Aufprallsensor, der mit der Aufprallsteuerung 6 verbunden ist.

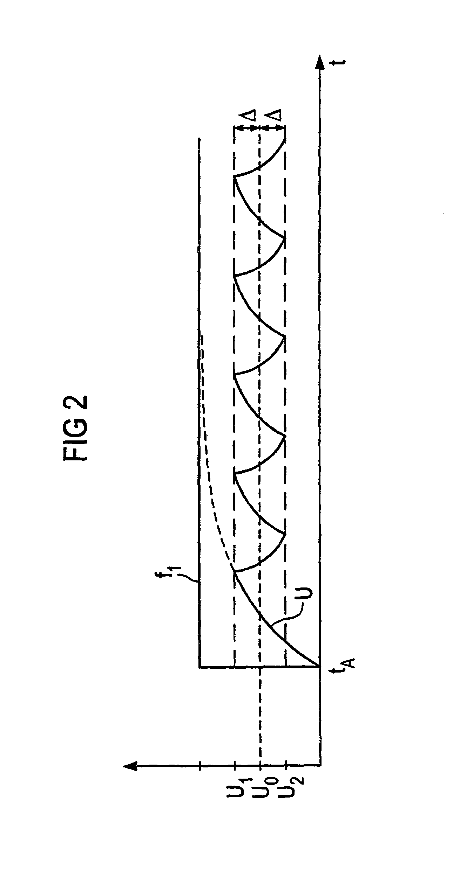

Der erste steuerbare Schalter 21 ist Bestandteil eines Schaltreglers 2, der neben dem Schalter 21 und der Hysteresesteuerung 22 ferner ein Filter bestehend aus einer Spule L und einem Kondensator C, eine Freilaufteode 25 einen Spannungsfühler 24 und einen Referenzwertgeber 23 aufweist. Der Schaltregler 2, auch Zweipunkt-Spannungsregler mit Schalthysterese genannt, regelt gemäß Figur 2 die Quellenspannung $U_{qu}$ auf eine um den Mittelwert $U_0$ pendelnde Spannung U. Liegt das Freigabesignal f1 vor, so wird der erste Schalter 21 leitend geschaltet. Damit steigt die Spannung U zwischen den in Figur 1 eingezeichneten Schaltungspunkten S1 und S2 im folgenden an. Der Spannungsfühler 24, beispielsweise ein einfacher Spannungsabgriff im Schaltungspunkt S2, liefert $U_{MEß}$ als Meßgröße. In der Hysteresesteuerung 22 wird zunächst die gemessene Größe $U_{MEß}$ mit einem ersten Referenzspannungswert $U_1$ verglichen. Wird der erste Refernzwert $U_1$ durch die gemessene Größe $U_{MEß}$ überschritten, so wird der Schalter 21 geöffnet. Daraufhin fällt die Spannung U wiederum ab, bis sie einen zweiten Referenzwert $I_2$ erreicht hat. Bei Unterschreiten des zweiten Referenzwertes $I_2$ durch die gemessene Größe $U_{MEß}$ wird der Schalter 21 wiederum geschlossen. Dadurch stellt sich ein in Figur 2 gezeigter Spannungsverlauf U ein, der mit einer durch die Refernzwerte $U_1$ und $U_2$ vorgegebenen Schalthysterese um einen festgelegten Mittelwert $U_0$ jeweils um den Betrag Delta U schwingt. Der Zeitpunkt $t_A$ ist dabei der Startzeitpunkt des Schaltregelvorgangs und wird durch das Freigabesignal F1 bestimmt. Die Referenzwerte $U_1$ und $U_2$ werden von einem Referenzwertgeber 23 geliefert. Vorzugsweise laufen Referenzwertgeber-, Hysteresesteuerungs- und Aufprallsteuerungsprozesse auf einem gemeinsamen Mikroprozessor. Spule L und Kondensator C bilden ein Tiefpaßfilter L,C für die Spannung U. Die Freilaufdiode 25 verhindert, daß die magnetische Energie der Spule L auf den Kondensator C geladen wird und dient damit der Blindleistungsreduktion.

Strichiert eingezeichnet sind weitere zweite elektrisch steuerbare Schalter 31 und 32, weitere Zündelemte 51 und 52 sowie weitere dritte steuerbare Schalter 41 und 42. Diese weiteren Zündelemte mit den jeweiligen zugehörigen Schaltern sind als Serienschaltung jeweils parallel zu der entsprechenden Serienschaltung des Zündkreises mit den Schaltern 3 und 4 und dem Zündelement 5 angeordnet. Freigabesignale f3 und f4 dienen der Ansteuerung der weiteren zweiten und dritten Schalter 31,41,32,42.

Die Spule des Tiefpaßfilters L,C ist gemäß der Erfindung für die gesamte Mehrzündkreis-Vorrichtung also nur einmal vorgesehen. Dies ist insofern von Vorteil, als Spulen nur aufwendig integrierbar sind, jedoch eine große Anzahl der Bauteile wie steuerbare Schalter und auch Zündelemente der erfindungsgemäßen Vorrichtung gemeinsam in einem Halbleiterbaustein integriert werden können. Die Erfindung hat also insbesondere als weiteren Vorteil, daß sie ein Optimum an Integrierbarkeit bietet. Darüberhinaus können bestehende, in integrierter Form vorliegende Zündkreise mit je zwei einem Zündelement individuell zugeordneten Schaltern auf einfache Art und Weise auch im Rahmen der vorliegenden Erfindung weiterbenutzt werden, da sie keiner Änderung zu unterziehen sind und lediglich um den Schaltregler ergänzt werden müssen.

**Patentansprüche**

1.  Vorrichtung zum Zünden eines Zündelements eines Kraftfahrzeug-Insassenschutzmittels,

- mit einer Spannungsquelle (1), die die Energie zum Zünden des Zündelements (5) bereitstellt,
- mit einer mit Polen (P1,P2) der Spannungsquelle (1) verbundenen Serienschaltung mit einem ersten steuerbaren Schalter (21), einem zweiten steuerbaren Schalter (3), dem Zündelement (5) und einem dritten steuerbaren Schalter (4), **dadurch gekennzeichnet,**
- **daß** der erste steuerbare Schalter (21) Bestandteil eines Schaltreglers (2) mit Schalthysterese zum Regeln der Quellenspannung ($U_{qu}$) auf eine um einen Mittelwert ($U_0$) pendelnde Spannung (U) ist und
- **daß** der Schaltregler (2) nur dann in einen Regelbetrieb geht, wenn ein entsprechendes Signal einer Aufprallerkennung vorliegt.

2. Vorrichtung nach Anspruch 1, **dadurch gekennzeichnet, daß** parallel zu einem Abschnitt der Serienschaltung enthaltend den zweiten steuerbaren Schalter (3), das Zündelement (5) und den dritten steuerbaren Schalter (4) mindestens eine weitere Serienschaltung enthaltend jeweils einen weiteren zweiten steuerbaren Schalter (31), ein weiteres Zündelement (51) und einen weiteren dritten steuerbaren Schalter (41) angeordnet ist.

3. Vorrichtung nach Anspruch 2, **dadurch gekennzeichnet, daß** der zweite und der dritte Schalter (3,4) strombegrenzendes Verhalten aufweisen.

4. Vorrichtung nach Anspruch 2 oder Anspruch 3, **dadurch gekennzeichnet, daß** mindestens ein weiterer zweiter und mindestens ein weiterer dritter steuerbarer Schalter (31,32,41,42) strombegrenzendes Verhalten aufweisen.

5. Vorrichtung nach einem der vorhergehenden Ansprüche, **dadurch gekennzeichnet, daß** ein dem Schaltregler (2) zugeordneter Spannungsfühler (24) zwischen dem ersten und dem zweiten steuerbaren Schalter (21,3) angeordnet ist, daß eine Hysteresesteuerung (22) zum Vergleichen der vom Spannungsfühler (24) gelieferten Größe ($U_{meß}$) mit einem ersten und mit einem zweiten Referenzwert ($U_1$,$U_2$) vorgesehen ist, und daß die Hysteresesteuerung (22) das Öffnen des steuerbaren Schalters (21) bei Überschreiten des ersten Referenzwertes ($U_1$) und das Schließen des ersten steuerbaren Schalters (21) bei Unterschreiten des zweiten Referenzwertes ($U_2$) veranlaßt.

6. Vorrichtung nach einem der vorhergehenden Ansprüche, **dadurch gekennzeichnet, daß** ein Filter (L,C) zur Glättung der um den Mittelwert (Uo) pendelnden entnommenen Spannung (U) vorgesehen ist.

7. Vorrichtung nach Anspruch 6, **dadurch gekennzeichnet, daß** das Filter (L,C) eine Spule (L) enthält.

## Claims

1. Device for igniting a squib of a vehicle occupant protection device,

   - with a voltage source (1), which supplies the energy for igniting the squib (5),
   - with a series circuit, connected to poles (P1, P2) of the voltage source (1), with a first controllable switch (21), a second controllable switch (3), the squib (5) and a third controllable switch (4), **characterized in that**
   - the first controllable switch (21) is a component of a switching controller (2) with switching hysteresis for regulating the source voltage ($U_{qu}$) to a voltage (U) oscillating about a mean ($U_0$) and
   - the switching controller (2) generally only starts control operations when a corresponding impact detection signal is present.

2. Device according to Claim 1, **characterized in that** at least one further series circuit containing one further second controllable switch (31), one further squib (51) and one further third controllable switch (41) respectively is arranged parallel to a section of the series circuit containing the second controllable switch (3), the squib (5) and the third controllable switch (4).

3. Device according to Claim 2, **characterized in that** the second and third switches (3, 4) demonstrate a current-limiting response.

4. Device according to Claim 2 or Claim 3, **characterized in that** at least one further second and at least one further third controllable switch (31, 32, 41, 42) demonstrate a current-limiting response.

5. Device according to one of the preceding claims, **characterized in that** a voltage probe (24) assigned to the switching controller (2) is arranged between the first and the second controllable switches (21, 3), a hysteresis controller (22) is provided to compare the variable ($U_{MEß}$) supplied by the voltage probe (24) with a first and with a second reference value ($U_1$, $U_2$) and the hysteresis controller (22) initiates the opening of the controllable switch (21) when the measured value exceeds the first reference value ($U_1$) and the closing of the first controllable switch (21) when the measured value is below the second reference value ($U_2$).

**6.** Device according to one of the preceding claims, **characterized in that** a filter (L, C) is provided to smooth the voltage (U) taken, which oscillates about the mean ($U_0$).

**7.** Device according to Claim 6, **characterized in that** the filter (L, C) contains a coil (L).

## Revendications

**1.** Dispositif permettant d'allumer un élément d'allumage d'un moyen de protection de passagers de véhicule automobile, comportant

- une source de tension (1) qui fournit l'énergie permettant d'allumer l'élément d'allumage (5),
- un montage en série relié à des pôles (P1, P2) de la source de tension (1) comprenant un premier interrupteur commandable (21), un deuxième interrupteur commandable (3), l'élément d'allumage (5) et un troisième interrupteur commandable (4), **caractérisé en ce que**
- le premier interrupteur commandable (21) fait partie d'un régulateur de commutation (2) à hystérésis de commutation permettant de régler la tension de source ($U_{qu}$) sur une tension (U) oscillant autour d'une valeur moyenne ($U_0$) et,
- le régulateur de commutation (2) n'entre en fonctionnement que s'il existe un signal approprié émis par un dispositif de détection de chocs.

**2.** Dispositif selon la revendication 1, **caractérisé en ce que**, parallèlement à une partie du montage en série comprenant le deuxième interrupteur commandable (3), l'élément d'allumage (5) et le troisième interrupteur commandable (4) est disposé au moins un montage en série supplémentaire comprenant respectivement un deuxième interrupteur commandable supplémentaire (31), un élément d'allumage supplémentaire (51) et un troisième interrupteur commandable supplémentaire (41).

**3.** Dispositif selon la revendication 2, **caractérisé en ce que** les deuxième et troisième interrupteurs (3,4) présentent un comportement limitant le courant.

**4.** Dispositif selon la revendication 2 ou selon la revendication 3, **caractérisé en ce qu'**au moins un deuxième et au moins un troisième interrupteur commandable supplémentaire (31,32,41,42) présentent un comportement limitant le courant.

**5.** Dispositif selon l'une des revendications précédentes, **caractérisé en ce qu'**un capteur de tension (24) affecté au régulateur de commutation (2) est disposé entre le premier et le deuxième interrupteur commandable (21,3), **en ce qu'**une commande à hystérésis (22) est prévue pour comparer la grandeur ($U_{meß}$) fournie par le capteur de tension (24) à une première et à une deuxième valeur de référence ($U_1$,$U_2$), et **en ce que** la commande à hystérésis (22) assure l'ouverture de l'interrupteur commandable (21) en cas de dépassement de la première valeur de référence ($U_1$) et la fermeture du premier interrupteur commandable (21) en cas de dépassement négatif de la deuxième valeur de référence ($U_2$).

**6.** Dispositif selon l'une des revendications précédentes, **caractérisé en ce qu'**un filtre (L,C) est prévu pour lisser la tension (U) prélevée qui oscille autour de la valeur moyenne ($U_0$).

**7.** Dispositif selon la revendication 6, **caractérisé en ce que** le filtre (L,C) comprend une bobine (L).

# FIG 1

EP 0 965 501 B1

FIG 2